# EUROPÄISCHE PATENTSCHRIFT

(11) **EP 1 561 968 B1**
(45) Veröffentlichungstag und Bekanntmachung des Hinweises auf die Patenterteilung: **14.11.2007**
(21) Anmeldenummer: 04020869.6
(22) Anmeldetag: 02.09.2004
(51) Int. Cl.: F16H 7/18

(54) **Spann- oder Führungsschiene mit Installationskanal**
Tension or guide rail with installation channel
Rail de tension ou de guidage avec canalisation pour installation

(30) Priorität: 04.02.2004 DE 202004001679 U
(43) Veröffentlichungstag der Anmeldung: 10.08.2005
(73) Patentinhaber: Joh. Winklhofer & Soehne GmbH und Co. KG, 81369 München (DE)
(72) Erfinder: Ketterl, Sandra, 85452 Moosinning (DE); Weikert, Michael, 85464 Neufinsing (DE); Bodensteiner, Martin, 85435 Erding (DE); Geibel, Henning, 82205 Gilching (DE)
(74) Vertreter: Grünecker, Kinkeldey, Stockmair & Schwanhäusser Anwaltssozietät

(56) Entgegenhaltungen:
- DE-C1- 19 721 199
- US-A- 5 868 638
- PATENT ABSTRACTS OF JAPAN Bd. 1999, Nr. 05, 31. Mai 1999 (1999-05-31) -& JP 11 030129 A (SUZUKI MOTOR CORP), 2. Februar 1999 (1999-02-02)

## Beschreibung

Die vorliegende Erfindung betrifft eine Spann- oder Führungsschiene für ein flexibles Antriebsmittel, insbesondere für eine Steuerkette eines Verbrennungsmotors, mit einem Tragkörper und einer an das flexible Antriebsmittel andrückbaren Führungsbahn.

Spann- oder Führungsschienen werden in großer Anzahl für Verbrennungsmotoren eingesetzt, insbesondere bei Steuerantrieben. Dieser Einsatzbereich stellt hohe Anforderungen sowohl an die Festigkeit der Schiene als auch an die Gleit- und Führungseigenschaften im Kontaktbereich zu dem flexiblen Antriebsmittel des Steuerantriebs. Daher wird als Tragkörper häufig eine Fachwerkstruktur verwendet, bei der die Festigkeit der Schiene durch die Streben der Fachwerkstruktur verbessert ist. Solche Tragkörper werden häufig als Aluminiumdruckgussprofile oder als verstärkte Kunststoffprofile hergestellt. Infolge der unterschiedlichen Anforderungen an solche Spann-oder Führungsschienen werden die Führungsabschnitte der Schienen zumeist aus einem anderen Material hergestellt als der Tragkörper. Zur Ausbildung eines solchen Führungsabschnitts mit einer mit dem flexiblen Antriebsmittel in Berührung stehenden Führungsbahn wird üblicherweise ein Gleitbelagkörper eingesetzt, der fest oder entfernbar mit dem Tragkörper verbunden ist.

Im Bereich der Automobilindustrie kommt es durch die markante Konkurrenzsituation zu einem starken Innovationsdruck, der auch im Bereich der Verbrennungsmotoren zu einem Vorantreiben der Entwicklung und immer kürzeren Entwicklungszyklen führt. Verbrennungsmotoren sind in den letzten Jahren immer komplexer geworden mit einer rapide angestiegenen Zahl von Nebenaggregaten und miteinander vernetzten Bauteilen was zu immer komplizierteren Motorkonstruktionen mit einer deutlich vergrößerten Anzahl von Funktionselementen und Bauteilen geführt hat, die auf immer kleiner werdenden Bauräumen untergebracht werden müssen

Aus der JP 11 030 129 A ist eine U-förmige Führungsschiene für einen Verbrennungsmotor bekannt, die gemeinsam mit dem Motorblock einen Öldurchlass aus dem Zylinderkopf in den Bereich der Kurbelwellen bereitstellt. Die US 5,868,638 zeigt eine zweiteilige Spannschiene mit einem zwischen den Teilen angeordneten Ölreservoir zur Versorgung eines Spannkolbens. Aus JP 11 036 840 A ist eine Spann- oder Führungsschiene mit den Merkmalen des Oberbegriffes der Ansprüche 1 und 8 bekannt.

Obwohl sich viele im Stand der Technik bekannten Spann- oder Führungsschienen im Einsatz bewährt haben, bestehen durch den Innovationsdruck kontinuierlich Bestrebungen, Konstruktionen zu verbessern und an die steigenden Anforderungen anzupassen. Außerdem handelt es sich bei Spann- oder Führungsschienen um Massenprodukte, bei denen im Hinblick auf die in der Automobilindustrie üblichen hohen Stückzahlen ständig die Notwendigkeit besteht, eingesetzte Konstruktionen durch einfachere und kostengünstigere Konzepte oder durch Konstruktionen, die zu einer Vereinfachung des Motoraufbaus und damit zu einer Reduktion des Montageaufwandes führen, zu ersetzen.

Der vorliegenden Erfindung liegt daher die Aufgabe zugrunde, eine Spann- oder Führungsschiene der eingangs genannten Art bereitzustellen, die die hohen Anforderungen für den Einsatz in Verbrennungsmotoren erfüllt, aber auch der gestiegenen Komplexität moderner Motorkonstruktionen bei einem reduzierten Motorbauraum gerecht wird.

Diese Aufgabe wird erfindungsgemäß dadurch gelöst, dass die Spann- oder Führungsschiene einen von der Führungsbahn wirkungsunabhängigen Installationskanal umfasst.

Aus der DE 37 06 136 C1 ist eine Schiene mit einem eine Kette allseitig umschließenden Kanal bekannt, wobei der Träger aus zwei zusammengesetzten Teilen besteht. Hierbei dient der Kanal ausschließlich zur Führung der Kette, wobei der Gleitbelagkörper die Kette umschließt und die Wandung des Kanals bildet. Des Weiteren sind beispielsweise aus der DE 100 14 325 A1 Spann- bzw. Führungsschienen bekannt, die mit im Grundkörper angeordneten Schmiermittelversorgungskanälen die Führungsbahn der Schiene mit Schmiermittel versorgen, um zwischen dem Antriebsmittel und der Führungsbahn eine gewünschte Schmierung und damit einen geringen Verschleiß zu erreichen. Demgegenüber wird bei der hier vorliegenden erfindungsgemäßen Ausgestaltung einer Spann- oder Führungsschiene ein wirkungsunabhängiger Installationskanal für Zusatzzwecke bereitgestellt jenseits der originären Aufgabe der Führung und/oder Spannung eines flexiblen Antriebsmittels.

Die vorstehende Ausgestaltung der erfindungsgemäßen Spann- oder Führungsschiene schafft im Verbrennungsmotor zusätzlichen Bauraum für die Anordnung und Führung von Motorbauteilen, ohne die Funktion oder die Festigkeit der Schiene negativ zu beeinflussen, wobei die Motorbauteile unabhängig von der Hauptaufgabe der Schiene sind. Der Installationskanal ermöglicht die Verlegung von Kabelsträngen oder Kabeln zu Sensoren oder Aktuatoren, die Durchführung von Versorgungssträngen, wie Fluidleitungen, sowie flexiblen und starren Betätigungsmitteln, oder die Durchführung anderer bewegter oder entfernbarer Bauteile. Der Installationskanal dient vorrangig zum Einbringen von unabhängig von der Spann- oder Führungsschiene funktionsfähigen Motorbauteilen. Durch diesen Installationskanal wird zusätzlich zur Führung des flexiblen Antriebsmittels durch die Spann- oder Führungsschiene in der Schiene ein Bauraum für die Installation zusätzlicher von der Spann- oder Führungsschiene funktionsunabhängiger Motorbauteile, d.h. keine Führungsbahn oder flexibles Antriebsmittel, ermöglicht.

Eine vorteilhafte Variante sieht vor, dass der Tragkörper mindestens ein erstes und mindestens ein zweites Tragkörperseitenteil umfasst, die fest miteinander verbunden sind und gemeinsam den Installationskanal umgrenzen. Diese Ausgestaltung der Spann- oder Führungsschiene ermöglicht bei einer Herstellung in Spritzgießtechnologie die Verwendung einfacher Formen ohne Schieber. Dabei sind die Tragkörperseitenteile fest miteinander verbunden, um ein unbeabsichtigtes Lösen der Tragkörperseitenteile zu vermeiden. Die sich durch das Zusammenfügen der Tragkörperseitenteile ergebende Teilungsebene kann sich bevorzugt senkrecht zur Führungsbahn und in Laufrichtung des flexiblen Antriebsmittels erstrecken. Die den Tragkörper bildenden Tragkörperseitenteile sind bevorzugt aus einem faserverstärkten Kunststoff, üblicherweise einem Thermoplastwerkstoff, in Spritzgießtechnik hergestellt, wobei auch andere Materialien und Herstellungstechniken, z.B. Aluminiumdruckguss, möglich sind. Die Tragkörperseitenteile können bevorzugt durch Verkleben, wofür eine im Wesentlichen hinterschneidungsfreie Teilungsebene notwendig ist, verschweißen, im Besonderen Ultraschallschweißen, oder durch Verklipsen mit in den Tragkörperseitenteilen integrierten oder zusätzlichen Rastelementen fest miteinander verbunden werden. Dabei können sich die Tragkörperseitenteile bevorzugt in Längsrichtung der Spann-oder Führungsschiene erstrecken, so dass auch der Installationskanal in Längsrichtung der Schiene durch den Tragkörper verläuft.

Eine günstige Ausführungsform sieht vor, dass der Installationskanal an seiner Umfangsfläche geschlossen ausgebildet ist. Die geschlossene Ausbildung des Installationskanals ermöglicht einen umschließenden Schutz des im Installationskanal angeordneten unabhängigen Motorbauteils, sowie, insbesondere bei einem kreisförmigen Querschnitt, eine stabile Form des Installationskanals und damit auch gute Festigkeitseigenschaften der Spann- oder Führungsschiene. In einer stabilen Konstruktion kann die Breite des Installationskanals über 50 %, bevorzugt über 80 %, der Breite des Tragkörpers entsprechen.

Für eine einfache Herstellung der Spann- oder Führungsschiene kann die Wandung des Installationskanals durch den Tragkörper gebildet sein. Dadurch kann auch auf eine zusätzliche Verkleidung der Innenwandung des Installationskanals verzichtet werden.

Bevorzugt kann der Installationskanal mit einem ersten offenen Ende und mit einem zweiten offenen Ende ausgebildet sein. Diese Konstruktion des Installationskanals ermöglicht eine ungehinderte Durchführung von Motorbauteilen. Dabei sind die offenen Enden bevorzugt entfernt von der Führungsbahn angeordnet.

Eine zweckmäßige Ausbildung sieht vor, dass das erste offene Ende und das zweite offene Ende an gegenüberliegenden stirnseitigen Enden der Spann- oder Führungsschiene angeordnet sind. Dadurch kann sich der Installationskanal in Längsrichtung durch den Tragkörper erstrecken, d.h. im Wesentlichen in Laufrichtung des Antriebsmittels. Dabei kann der Installationskanal bevorzugt im Bereich der Fachwerkstreben des Tragkörpers verlaufen. Die Länge des Installationskanals kann über 50 %, bevorzugt über 80 %, der Länge der Spann- oder Führungsschiene entsprechen, wobei der Installationskanal im Tragkörper bogenförmig, bevorzugt parallel zur Führungsbahn, verlaufen kann.

Eine Modifikation sieht vor, dass das erste offene Ende und/oder das zweite offene Ende mit einem vorstehenden Stutzen oder zur Aufnahme eines Stutzens ausgebildet sind. Eine solche Ausführung des Installationskanals ermöglicht eine gute Anbindung an vor- oder nachgelagerten Installations- und Führungseinheiten, der im Installationskanal angeordneten Motorbauteile.

Neben der stirnseitigen Anordnung der offenen Enden des Installationskanals kann mindestens ein Ende auch auf einer nach außen gerichteten Seitenfläche eines Tragkörperseitenteils angeordnet sein und möglicherweise einen Stutzen aufweisen. Dabei kann sich dieses Ende des Installationskanals auch zu beiden Tragkörperseitenteilen hin öffnen.

Eine vorteilhafte Ausgestaltung sieht vor, dass die Spann- oder Führungsschiene einen Gleitbelagkörper umfasst, der mit dem Tragkörper verbunden ist und die Führungsbahn ausbildet. Der Gleitbelagkörper ermöglicht gute Führungs- und Gleiteigenschaften der Führungsbahn, unabhängig vom Tragkörper und dem Material des Tragkörpers.

Für eine sicher Verbindung des Gleitbelagkörpers mit dem Tragkörper kann der Gleitbelagkörper an mindestens einem Tragkörperseitenteil angespritzt sein. Ein solches Anspritzen eines Gleitbelagkörpers auf einem Tragkörperseitenteil erfolgt üblicherweise mittels eines Zwei-Komponenten-Spritzverfahrens. Bei sich in Längsrichtung erstreckenden Tragkörperseitenteilen, bei denen die Teilungsebene im Wesentlichen senkrecht zur Führungsbahn verläuft, erfordert das Anspritzen des Gleitbelagkörpers an ausschließlich einem Tragkörperseitenteil eine ungleichförmige Aufteilung des Tragkörpers auf die mindestens zwei Tragkörperseitenteile, falls der Gleitbelagkörper über die gesamte Breite der Führungsbahn angespritzt werden soll.

Eine einfache Verbindung zwischen dem Tragkörper und einem Gleitbelagkörper kann dadurch erreicht werden, dass der Gleitbelagkörper formschlüssig mit dem Tragkörper verbunden ist. Hierbei wird zunächst ein separater Gleitbelagkörper gefertigt, der nachträglich mit dem Tragkörper verbunden wird. Dies ermöglicht neben einer nachträglichen Montage auf einem zusammengefügten und geprüften Tragkörper auch eine Demontage und Ersatz des Gleitbelagkörpers.

Des Weiteren bezieht sich die vorliegende Erfindung auf einen Verbrennungsmotor mit einem Steuertrieb, der ein flexibles Antriebsmittel und mindestens eine Spann-oder Führungsschiene nach einem der Ansprüche 1 bis 10 umfasst, wobei das flexible Antriebsmittel mit der Führungsbahn in Berührung steht und ein zusätzliches, mit dem Verbrennungsmotor in Wirkbeziehung stehendes Bauteil sich zumindest bereichsweise durch den Installationskanal erstreckt. Ein solcher Verbrennungsmotor ermöglicht eine Vereinfachung der Konstruktion, insbesondere bei komplexen Motorkonzepten mit vielen Nebenaggregaten bei geringen Bauräumen. Die Möglichkeiten der Anordnung von zusätzlichen, mit dem Verbrennungsmotor in Wirkbeziehung stehenden Bauteilen lässt sich hierdurch erhöhen.

Die vorliegende Erfindung könnte sich weiter auf ein Verfahren zur Herstellung einer Spann- oder Führungsschiene für ein flexibles Antriebsmittel, insbesondere für eine Steuerkette eines Verbrennungsmotors, mit einem Tragkörper und einer an das flexible Antriebsmittel andrückbaren Führungsbahn beziehen, wobei mindestens ein erstes und mindestens ein zweites Tragkörperseitenteil hergestellt werden, die Tragkörperseitenteile miteinander zusammengefügt werden, und die Tragkörperseitenteile gemeinsam einen von der Führungsbahn wirkungsunabhängigen Installationskanal umgrenzen. Dieses Verfahren ermöglicht eine einfache Herstellung von Spann- oder Führungsschienen, die durch ihre Konstruktion die Möglichkeiten der Anordnung von wirkungsunabhängigen Motorbauteilen erhöhen, insbesondere bei einem eingeschränkten Bauraum für den Verbrennungsmotor.

Anhand der Zeichnungen werden zwei Ausführungsformen der erfindungsgemäßen Spann- und Führungsschiene näher erläutert. Es zeigen:
- Fig. 1: eine perspektivische Seitenansicht einer Spann- oder Führungsschiene,
- Fig. 2: eine perspektivische Ansicht der Teilungsebene eines Tragkörperseitenteils der in Fig. 1 gezeigten Spann- oder Führungsschiene,
- Fig. 3: eine perspektivische Ansicht einer äußeren Seitenfläche eines Tragkörperseitenteils der in Fig. 1 gezeigten Spann- oder Führungsschiene, und
- Fig. 4: eine perspektivische Seitenansicht einer weiteren Ausführungsform einer Spann- oder Führungsschiene.

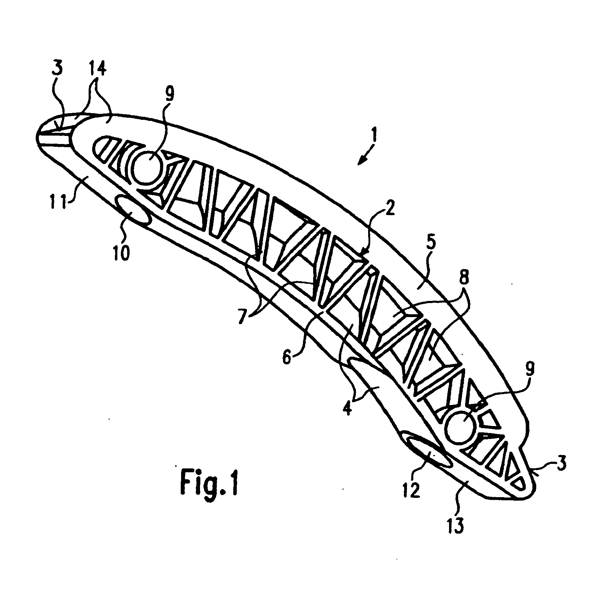

In Fig. 1 ist eine erste Ausführungsform der erfindungsgemäßen Spann- oder Führungsschiene 1 dargestellt, die einen Tragkörper 2 mit einer Führungsbahn 3 und einem Installationskanal 4 aufweist. Der Tragkörper 2 weist einen mit der Führungsbahn 3 versehenen oberen Abschnitt 5 und einen unteren Abschnitt 6 auf, die durch Querstreben 7 zum Erzeugen einer Fachwerkstruktur miteinander verbunden sind. Die durch den oberen Abschnitt 5, den unteren Abschnitt 6 und die Querstreben 7 begrenzten offenen Bereiche der Fachwerkstruktur sind von einer Trennwand 8 unterbrochen. An beiden Enden der sich in Längsrichtung erstreckenden Spann- oder Führungsschiene 1 ist jeweils ein Lagerauge 9 eingeformt. Der Installationskanal 4 erstreckt sich von einer ersten Öffnung 10 auf einem ersten stirnseitigen Abschnitt 11 des Tragkörpers 2, der den oberen Abschnitt 5 mit dem unteren Abschnitt 6 miteinander verbindet, zu einer zweiten Öffnung 12 auf einem zweiten stirnseitigen Abschnitt 13, der auf dem gegenüberliegenden Ende des sich in Längsrichtung erstreckenden Tragkörpers 2 den oberen Abschnitt 5 mit dem unteren Abschnitt 6 verbindet. Der erste stirnseitige Abschnitt 11 und der zweite stirnseitige Abschnitt 13 verlaufen in einem spitzen Winkel zur Führungsbahn 3 des Tragkörpers 2, um den deutlich kürzeren unteren Abschnitt 6 mit dem oberen Abschnitt 5 zu verbinden. Der Installationskanal 4 erstreckt sich größtenteils durch die Fachwerkstruktur des Tragkörpers 2, wobei die Wandung des Installationskanals 4 teilweise einen Teil der Trennwand 8 bildet. Die Führungsbahn 3 auf dem oberen Abschnitt 5 des Tragkörpers 2 weist zwei sich in Längsrichtung erstreckende seitliche Führungen 14 auf, die gegenüber der Führungsbahn 3 vorstehen und gemeinsam mit dem Tragkörper 2 ausgebildet sind, und eine seitliche Führung für das flexible Antriebsmittel bilden.

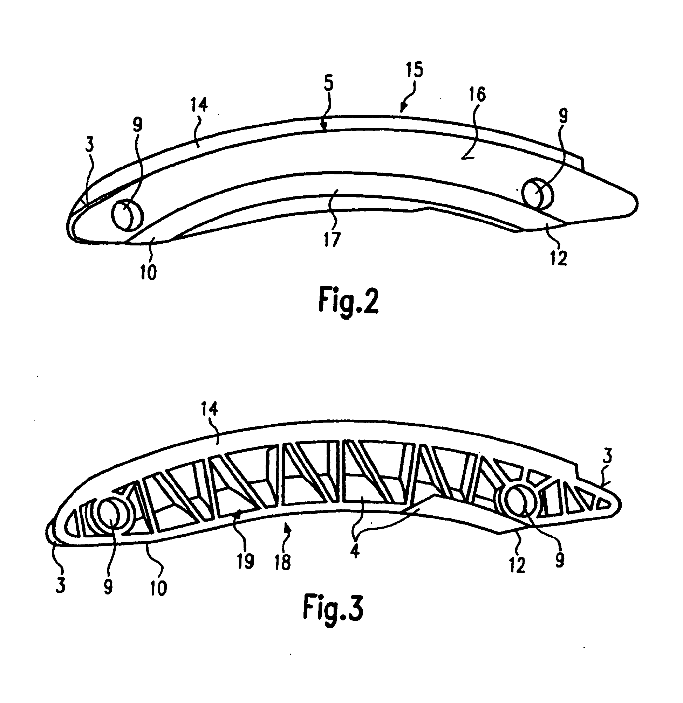

Fig. 2 zeigt die perspektivische Ansicht eines ersten Tragkörperseitenteils 15 mit einer Ansicht auf die Teilungsebene 16, mit der das erste Tragkörperseitenteil 15 mit einem zweiten Tragkörperseitenteil zusammenfügbar ist. In der Teilungsebene 16 verläuft unterhalb der Lageraugen 9 der Installationskanal 4 als halbkreisförmige, sich bogenförmig in Längsrichtung erstreckende Vertiefung zwischen der ersten Öffnung 10 und der zweiten Öffnung 12, die die Innenwandung 17 des Installationskanals 4 ausbildet. Im oberen Abschnitt des ersten Tragkörperseitenteils 15 ist eine seitliche Führung 14 und ein Teil der Führungsbahn 3 ausgebildet.

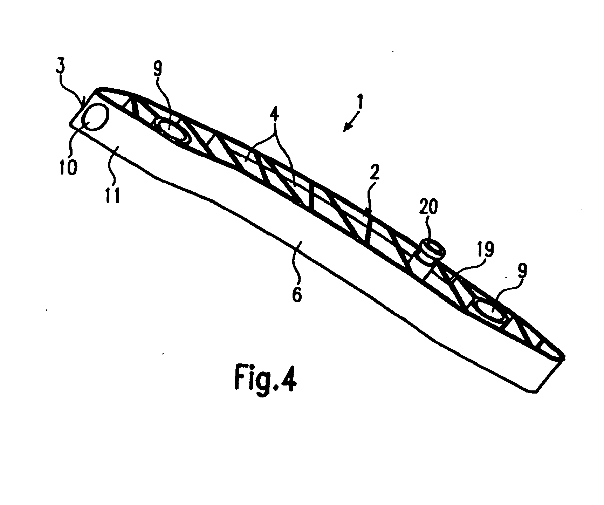

Fig. 3 zeigt ein zweites Tragkörperseitenteil 18, der in Fig. 1 gezeigten Spann- oder Führungsschiene 1 mit seiner äußeren Seitenfläche 19, das mit dem in Fig. 2 gezeigten ersten Tragkörperseitenteil 15 zusammengefügt werden kann, um die in Fig. 1 gezeigte erfindungsgemäße Spann- oder Führungsschiene 1 auszubilden.

Eine weitere Ausführung der erfindungsgemäßen Spann- oder Führungsschiene 1 wird in Fig. 4 gezeigt. Diese Spann- oder Führungsschiene 1 weist hinsichtlich des Tragkörpers 2 und der Ausbildung der Führungsbahn 3 eine mit der in Fig. 1 gezeigten Ausführung identische Konstruktion auf, weshalb für den Tragkörper 2 und die Führungsbahn 3 auf die obige Beschreibung verwiesen wird, und im Folgenden nur auf die Unterschiede zu der erstgezeigten Konstruktion eingegangen wird. Der Installationskanal 4 dieser Spann- oder Führungsschiene 1 erstreckt sich von einer direkt neben der Führungsbahn 3 angeordneten ersten Öffnung 10 auf dem ersten stirnseitigen Abschnitt 11 durch den Tragkörper 2 hindurch bis zu einem in der Nähe des zweiten Lagerauges 9 aus der äußeren Seitenfläche 19 des Tragkörperseitenteils vorstehenden Stutzen 20.

Der Tragkörper 2 dieser erfindungsgemäßen Spann- oder Führungsschiene 1 besteht vorzugsweise aus Kunststoff, z.B. einem faserverstärkten Thermoplastwerkstoff, wobei der obere Abschnitt 5 des Tragkörpers 2 eine in dieser Ausführungsform gekrümmt verlaufende ebene Führungsbahn 3 bildet. Dabei wird der Tragkörper 2 üblicherweise einteilig in einem Arbeitsvorgang hergestellt, bevorzugt in einem Spritzgießverfahren, wobei der Installationskanal 4 durch einen in die jeweilige Spritzgießform eingeführten Schieber sich direkt beim Spritzgießvorgang ausbildet. Alternativ können das erste Tragkörperseitenteil 15 und das zweite Tragkörperseitenteil 18 unabhängig voneinander hergestellt und in einem zweiten Arbeitsschritt fest miteinander verbunden werden. Neben einem einfachen Verkleben der Teilungsebenen 16 der Tragkörperseitenteile 15 und 18 miteinander ist dabei sowohl auch ein Verschweißen, insbesondere Ultraschallverschweißen als auch ein Verbinden mittels Formschlusselemente, z.B. Rastelemente, möglich.

Zur Verbesserung der Gleit- und Führungseigenschaften der Führungsbahn 3 kann der Tragkörper 2 mit einem Gleitbelagkörper versehen sein. Ein solcher Gleitbelagkörper kann neben dem nachträglichen Aufbringen auf dem fertigen Tragkörper 2 auch vor dem Zusammenfügen der Tragkörperseitenteile 15 und 18 an einem Tragkörperseitenteil 15,18 in einem Zwei-Komponenten-Spritzverfahren angebracht sein. Zur Vermeidung von Nähten und Unterbrechungen kann bei einer zweitteiligen Ausbildung des Tragkörpers 2 ein solcher Gleitbelagkörper bevorzugt nur mit einem Tragkörperseitenteil verbunden sein, wodurch die Tragkörperseitenteile 15 und 18 im Bereich des oberen Abschnitts 5 des Tragkörpers 2 unterschiedlich ausgebildet sein müssen, d.h. die Führungsbahn 3 wird nur durch ein Tragkörperseitenteil 15,18 ausgebildet.

## Patentansprüche

1. Vorrichtung für einen Verbrennungsmotor, mit einer Spann- oder Führungsschiene (1) für ein flexibles Antriebsmittel, insbesondere für eine Steuerkette des Verbrennungsmotors, und einem mit dem Verbrennungsmotor in Wirkbeziehung stehenden Bauteils, wobei die Spann- oder Führungsschienen einen Tragkörper (2) und eine an das flexible Antriebsmittel andrückbare Führungsbahn (3) umfasst, das flexible Antriebsmittel mit der Führungsbahn (3) in Berührung steht, ein Installationskanal (4) an seiner Umfangsfläche geschlossen ausgebildet ist, der Installationskanal (4) mit einem ersten offenen Ende (10) und einem zweiten offenen Ende (12) ausgebildet ist, und das mit dem Verbrennungsmotor in Wirkbeziehung stehende Bauteil sich zumindest bereichsweise durch den Installationskanal (4) erstreckt, **dadurch gekennzeichnet, dass** die Spann- oder Führungsschiene (1) den von der Führungsbahn (3) wirkungsunabhängigen Installationskanal (4) umfasst die Wandung (17) des Installationskanals (4) durch den Tragkörper gebildet ist und das erste offen Ende (10) und das zweite offene Ende (12) an gegenüberliegenden stirnseitigen Enden (11,13) der Spann- oder Führungsschiene (1) angeordnet sind.

2. Vorrichtung für einen Verbrennungsmotor nach einem Anspruch 1,
**dadurch gekennzeichnet, dass** der Tragkörper (2) mindestens ein erstes und mindestens ein zweites Tragkörperseitenteil (15,18) umfasst, die Tragkörperseitenteile (15,18) fest miteinander verbunden sind und gemeinsam den Installationskanal (4) umgrenzen.

3. Vorrichtung für einen Verbrennungsmotor nach einem der Ansprüche 1 oder 2,
**dadurch gekennzeichnet, dass** das erste offene Ende (10) und/oder das zweite offene Ende (12) mit einem vorstehenden Stutzen (20) oder zur Aufnahme eines Stutzens ausgebildet sind.

4. Vorrichtung für einen Verbrennungsmotor nach einem der Ansprüche 1 bis 3,
**dadurch gekennzeichnet, dass** die Spann- oder Führungsschiene (1) einen Gleitbelagkörper umfasst, der mit dem Tragkörper (2) verbunden ist und die Führungsbahn (3) ausbildet.

5. Vorrichtung für einen Verbrennungsmotor nach Anspruch 4,
**dadurch gekennzeichnet, dass** der Gleitbelagkörper an mindestens einem Tragkörperseitenteil (15,18) angespritzt ist.

6. Vorrichtung für einen Verbrennungsmotor nach Anspruch 4,
**dadurch gekennzeichnet, dass** der Gleitbelagkörper formschlüssig mit dem Tragkörper (2) verbunden ist.

7. Verbrennungsmotor mit einem Steuertrieb, der ein flexibles Antriebsmittel und mindestens eine Vorrichtung für einen Verbrennungsmotor nach einem der Ansprüche 1 bis 6 umfasst.

8. Verwendung einer Spann- oder Führungsschiene (1) zum Spannen oder Führen eines flexiblen Antriebsmittels in einem Verbrennungsmotor, insbesondere der Steuerkette des Verbrennungsmotors, wobei die Spann- oder Führungsschienen einen Tragkörper (2) und eine an das flexible Antriebsmittel andrückbare Führungsbahn (3) umfasst, das flexible Antriebsmittel mit der Führungsbahn (3) in Berührung steht, ein Installationskanal (4) an seiner Umfangsfläche geschlossen ausgebildet ist, der Installationskanal (4) mit einem ersten offenen Ende (10) und einem zweiten offenen Ende (12) ausgebildet ist wobei die Verwendung derart erfolgt, dass ein mit dem Verbrennungsmotor in Wirkbeziehung stehendes Bauteil sich zumindest bereichsweise durch den Installationskanal (4) erstreckt, **dadurch gekennzeichnet, dass** die Spann- oder Führungsschiene (1) den von der Führungsbahn (3) wirkungsunabhängigen Installationskanal (4) umfasst die Wandung (17) des Installationskanals (4) durch den Tragkörper gebildet ist, und das erste und das zweite offene Ende (10, 12) an gegenüberliegenden stirnseitigen Enden (11,13) der Spann- oder Führungsschiene (1) angeordnet sind.

## Claims

1. A device for an internal combustion engine, comprising a tension or guide rail (1) for a flexible drive means, particularly for a control chain of the internal combustion engine, and a component in operative relationship with the internal combustion engine, the tension or guide rails comprising a carrier body (2) and a guide track (3) which can be pressed onto the flexible drive means, the flexible drive means being in contact with the guide track (3), an installation channel (4) being formed enclosed on its circumferential surface, the installation channel (4) being formed with a first open end (10) and a second open end (12), and the component in operative relationship with the internal combustion engine extending at least in portions through the installation channel (4), **characterized in that** the tension or guide rail (1) comprises the installation channel (4) acting independently from the guide track (3), the wall (17) of the installation channel (4) is formed by the carrier body, and the first open end (10) and the second open end (12) are arranged at opposite front ends (11, 13) of the tension or guide rail (1).

2. The device for an internal combustion engine according to claim 1, **characterized in that** the carrier body (2) comprises at least a first and at least a second carrier-body side part (15, 18), the carrier-body side parts (15, 18) are firmly joined together and jointly define the installation channel (4).

3. The device for an internal combustion engine according to any one of claims 1 or 2, **characterized in that** the first open end (10) and / or the second open end (12) are formed with a protruding connection piece (20) or for accommodating a connection piece.

4. The device for an internal combustion engine according to any one of claims 1 to 3, **characterized in that** the tension or guide rail (1) comprises a slideway liner which is joined to the carrier body (2) and forms the guide track (3).

5. The device for an internal combustion engine according to claim 4, **characterized in that** the slideway liner is injected onto at least one carrier-body side part (15, 18).

6. The device for an internal combustion engine according to claim 4, **characterized in that** the slideway liner is joined to the carrier body (2) with a positive locking.

7. An internal combustion engine comprising a control drive including a flexible drive means and at least a device for an internal combustion engine according to any one of claims 1 to 6.

8. Use of a tension or guide rail (1) for tensioning or guiding a flexible drive means in an internal combustion engine, particularly the control chain of the internal combustion engine, the tension or guide rails comprising a carrier body (2) and a guide track (3) adapted to be pressed against the flexible drive means, the flexible drive means being in contact with the guide track (3), an installation channel (4) being formed enclosed on its circumferential surface, the installation channel (4) being formed with a first open end (10) and a second open end (12), the use being such that a component in operative relationship with the internal combustion engine extends at least in portions through the installation channel (4), **characterized in that** the tension or guide rail (1) comprises the installation channel (4) which acts independently from the guide track (3), the wall (17) of the installation channel (4) is formed by the carrier body, and the first and the second open end (10, 12) are arranged on opposite front ends (11, 13) of the tension or guide rail (1).

## Revendications

1. Dispositif destiné à un moteur à combustion interne, comportant un rail de tension ou de guidage (1) pour un moyen d'entraînement flexible, en particulier pour une chaîne de commande du moteur à combustion interne, et un composant en relation active avec le moteur à combustion interne, le rail de tension ou de guidage comportant un corps porteur (2) et une coulisse (3) pouvant être appuyée sur le moyen d'entraînement flexible, le moyen d'entraînement flexible étant en contact avec la coulisse (3), un canal d'installation (4) étant configuré en étant fermé au niveau de sa surface périphérique, le canal d'installation (4) étant doté d'une première extrémité ouverte (10) et d'une deuxième extrémité ouverte (12) et le composant en relation active avec le moteur à combustion interne s'étendant au moins en partie au travers du canal d'installation (4), **caractérisé en ce que** le rail de tension ou de guidage (1) comporte le canal d'installation (4) qui agit indépendamment de la coulisse (3), la paroi (17) du canal d'installation (4) étant formée au travers du corps porteur, et la première extrémité ouverte (10) et la deuxième extrémité ouverte (12) étant disposées au niveau d'extrémités frontales opposées (11, 13) du rail de tension ou de guidage (1).

2. Dispositif destiné à un moteur à combustion interne selon la revendication 1, **caractérisé en ce que** le corps porteur (2) comporte au moins un premier et au moins un deuxième élément latéral de corps porteur (15, 18), les éléments latéraux de corps porteur (15, 18) étant reliés fermement l'un à l'autre et délimitant ensemble le canal d'installation (4).

3. Dispositif destiné à un moteur à combustion interne selon la revendication 1 ou 2, **caractérisé en ce que** la première extrémité ouverte (10) et/ou la deuxième extrémité ouverte (12) sont dotées d'une tubulure (20) en saillie ou configurées de manière à loger une tubulure.

4. Dispositif destiné à un moteur à combustion interne selon l'une quelconque des revendications 1 à 3, **caractérisé en ce que** le rail de tension ou de guidage (1) comporte un corps de revêtement de glissière, qui est relié au corps porteur (2) et forme la coulisse (3).

5. Dispositif destiné à un moteur à combustion interne selon la revendication 4, **caractérisé en ce que** le corps de revêtement de glissière est moulé par injection sur au moins un élément latéral de corps porteur (15, 18).

6. Dispositif destiné à un moteur à combustion interne selon la revendication 4, **caractérisé en ce que** le corps de revêtement de glissière est relié par conjugaison de forme avec le corps porteur (2).

7. Moteur à combustion interne avec une chaîne de commande, qui comporte un moyen d'entraînement flexible et au moins un dispositif destiné à un moteur à combustion interne selon l'une quelconque des revendications 1 à 6.

8. Utilisation d'un rail de tension ou de guidage (1) pour tendre ou guider un moyen d'entraînement flexible dans un moteur à combustion interne, en particulier la chaîne de commande du moteur à combustion interne, le rail de tension ou de guidage comportant un corps porteur (2) et une coulisse (3) pouvant être appuyée sur le moyen d'entraînement flexible, le moyen d'entraînement flexible étant en contact avec la coulisse (3), un canal d'installation (4) étant configuré en étant fermé au niveau de sa surface périphérique, le canal d'installation (4) étant doté d'une première extrémité ouverte (10) et d'une deuxième extrémité ouverte (12), l'utilisation étant réalisée de telle sorte qu'un composant en relation active avec le moteur à combustion interne s'étend au moins en partie au travers du canal d'installation (4), **caractérisé en ce que** le rail de tension ou de guidage (1) comporte le canal d'installation (4) qui agit indépendamment de la coulisse (3), la paroi (17) du canal d'installation (4) étant formée au travers du corps porteur, et la première et la deuxième extrémités ouvertes (10, 12) étant disposées au niveau d'extrémités frontales opposées (11, 13) du rail de tension ou de guidage (1).
